# EUROPÄISCHE PATENTSCHRIFT

(11) **EP 1 656 423 B1**
(45) Veröffentlichungstag und Bekanntmachung des Hinweises auf die Patenterteilung: **09.04.2008**
(21) Anmeldenummer: 04741363.8
(22) Anmeldetag: 04.08.2004
(51) Int. Cl.: C08L 67/00, C08F 291/00, C08L 3/04

(54) **BIOLOGISCH ABBAUBARE POLYESTERMISCHUNG**
BIODEGRADABLE POLYESTER MIXTURE
MELANGE DE POLYESTER BIODEGRADABLE

(30) Priorität: 06.08.2003 DE 10336387
(43) Veröffentlichungstag der Anmeldung: 17.05.2006
(73) Patentinhaber: BASF SE, 67056 Ludwigshafen (DE)
(72) Erfinder: YAMAMOTO, Motonori, 68199 Mannheim (DE); HEUFEL, Dietmar, 64673 Zwingenberg (DE); STÄRKE, Dirk, 67098 Bad Dürkheim (DE); WITT, Uwe, 67112 Mutterstadt (DE); SKUPIN, Gabriel, 67346 Speyer (DE)
(86) Internationale Anmeldenummer: PCT/EP2004/008717
(87) Internationale Veröffentlichungsnummer: WO 2005/017034

(56) Entgegenhaltungen:
- EP-A- 0 596 437
- WO-A-02/083784
- US-B1- 6 235 815
- DATABASE WPI Week 200377 Derwent Publications Ltd., London, GB; AN 2003-820021 XP002302306 & JP 2003 221423 A (AEBA T) 5. August 2003 (2003-08-05)

## Beschreibung

Die vorliegende Erfindung betrifft biologisch abbaubare Polyestermischungen, umfassend
5 bis 80 Gew.-%, bezogen auf das Gesamtgewicht der Komponenten i bis ii, mindestens eines Polyesters auf Basis von aliphatischen und aromatischen Dicarbonsäuren und aliphatischen Dihydroxyverbindung (Komponente i) und
20 bis 95 Gew.%, bezogen auf das Gesamtgewicht der Komponenten i bis ii, mindestens eines nachwachsenden Rohstoffs (Komponente ii) und
0,1 bis 15 Gew.%, bezogen auf das Gesamtgewicht der Komponenten i bis ii, einer Komponente iii, die zur Ausbildung kovalenter Bindungen sowohl mit Komponente i als auch mit Komponenten ii geeignet ist, und zwei oder mehr Epoxidgruppen im Molekül enthält.
   Weiterhin betrifft die vorliegende Erfindung Verfahren zur Herstellung biologisch abbaubarer Polyestermischungen, die Verwendung von biologisch abbaubaren Polyestermischungen zur Herstellung von Blends, Formteilen, Folien oder Fasern sowie Blends, Formteile, Folien oder Fasern umfassend biologisch abbaubare Polyestermischungen.

Biologisch abbaubare Mischungen aus synthetisch hergestellten Polymermaterialien und natürlich vorkommenden, meist hochmolekularen oder polymeren Stoffen auf pflanzlicher Basis, den sogenannten nachwachsenden Rohstoffen, sind bekannt. Solche Mischungen vereinigen idealerweise die wünschenswerten Eigenschaften der Einzelkomponenten, beispielsweise die in der Regel guten Verarbeitungs- und mechanischen Eigenschaften der synthetischen Polymere mit der üblicherweise kostengünstigeren Verfügbarkeit und ökologisch unbedenklichen Herstell- und Entsorgbarkeit der natürlich vorkommenden Stoffe.

In der Praxis ist es aber oftmals schwierig, die angestrebte Eigenschaftskombination zu erreichen. So ist es zwar aus wirtschaftlichen und ökologischen Gründen wünschenswert, in besagten Mischungen einen möglichst hohen Anteil kostengünstig verfügbarer und ökologisch unbedenklicher, nachwachsender Rohstoffe anzustreben, allerdings besitzen solche Mischungen aufgrund der oftmals nur unzureichenden Mischbarkeit und dem geringen Anteil synthetischen Polymers keine ausreichend gute Verarbeitbarkeit oder keine ausreichenden mechanischen Eigenschaften.

Biologisch abbaubare "Interpolymere" beziehungsweise Mischungen aus synthetischen und natürlichen Polymeren mit verbesserter Mischbarkeit der Komponenten werden in WO 93/23456 offenbart. Als synthetische Polymere sind gemäß der Lehre dieser Schrift nahezu alle, auch nicht-biologisch abbaubaren Polymere geeignet, sofern sie eine funktionelle Gruppe aufweisen, die mittels Reaktiv-Blendings bei erhöhten Temperaturen kovalente und physikalische Bindungen zum natürlichen Polymer, beispielsweise Kohlehydrat wie Stärke oder Cellulose, ausbilden. Nachteilig bei diesen "Interpolymeren" beziehungsweise Mischungen ist aber, daß die Eigenschaft der biologischen Abbaubarkeit lediglich für die Bindungen zwischen synthetischem und natürlichem Polymer sowie die natürliche Polymerkomponente gegeben ist; etwaige Anteile synthetischer, nicht-biologisch abbaubarer Polymere bleiben nicht-biologisch abbaubar. Die in WO 93/23456 offenbarten "Interpolymere" beziehungsweise Mischungen sind insofern nur teilweise biologisch abbaubar.

Vollständig biologisch abbaubare Mischungen aus aliphatischen Polyestern enthaltend aliphatische Hydroxycarbonsäurereste und Biomasse-Materialien werden von EP-A2 897 943 beschrieben. Die verbesserte Mischbarkeit dieser Komponenten wird durch die Anwesenheit einer ungesättigten Carbonsäure ermöglicht, welche während eines Heiz- und Knetvorgangs kovalente Bindungen zu den aliphatischen Polyestern einerseits und den Biomasse-Materialien andererseits ausbildet. Wie die gesamte Mischung sind auch die kovalent gebundenen aliphatischen Polyester enthaltend aliphatische Hydroxycarbonsäurereste zwar vollständig biologisch abbaubar; allerdings ist die Abbaurate der Mischungen, das heißt, der Anteil abgebauten Materials innerhalb einer definierten Zeit, im Hinblick auf viele Anwendungszwecke verbesserungswürdig.

In der JP2003221423 werden bioabbanbare Massen aus aliphatish-aromatischen Polyestern, Biomasse-Materialien, ungesättigter Carbonsäure und einem Radikalstarter beschrieben.

Der vorliegenden Erfindung liegt somit die Aufgabe zugrunde, biologisch abbaubare Polymermischungen mit hohem Anteil kostengünstiger und ökologisch unbedenklicher, nachwachsender Rohstoffe zur Verfügung zu stellen, die neben guten Verarbeitungs- und mechanischen Eigenschaften verbesserte Abbauraten aufweisen.

Diese Aufgabe wird von den eingangs definierten biologisch abbaubaren Polyestermischungen, die im folgenden näher beschrieben sind, erfüllt.

Prinzipiell kommen für die Herstellung der erfindungsgemäßen biologisch abbaubaren Polyestermischungen als Komponente i alle Polyester auf Basis von aliphatischen und aromatischen Dicarbonsäuren und aliphatischen Dihydroxyverbindung, sogenannte teilaromatische Polyester, in Betracht. Selbstverständlich sind auch Mischungen mehrerer solcher Polyester als Komponente i geeignet.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446,25448 oder der WO 98/12242, bekannt, auf die ausdrücklich Bezug genommen wird. Mischungen unterschiedlicher teilaromatischer Polyester kommen ebenso in Betracht.

Zu den besonders bevorzugten teilaromatischen Polyestern zählen Polyester, die als wesentliche Komponenten
A) eine Säurekomponente aus
   a1) 30 bis 99 mol-% mindestens einer aliphatischen oder mindestens einer cycloaliphatischen Dicarbonsäure oder deren esterbildende Derivate oder Mischungen davon
   a2) 1 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
   und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder IIb 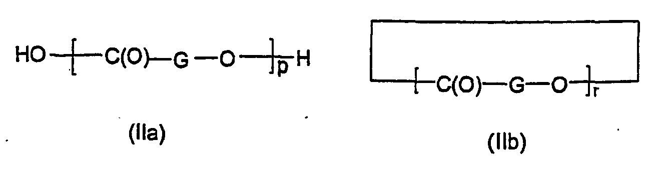 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 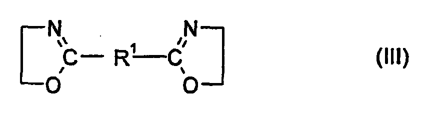 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und Ivb 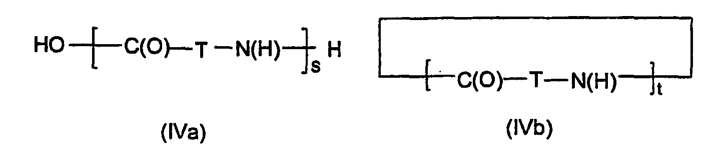 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 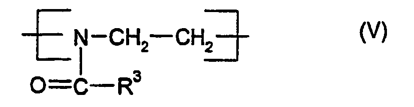 in der R³ für Wasserstoff, C₁-C₆-Alkyl, C₅-C₈-Cycloalkyl, unsubstituierten oder mit C₁-C₄-Alkyigruppen bis zu dreifach substituiertes Phenyl oder für Tetrahydrofuryl steht,
      oder Mischungen aus c1 bis c6
      und
D) einer Komponente ausgewählt aus
   d1) mindestens einer Verbindung mit mindestens drei zur Esterbildung befähigten Gruppen,
   d2) mindestens eines Isocyanates
   d3) mindestens eines Divinylethers
   oder Mischungen aus d1) bis d3) enthalten.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol% a2.

Als aliphatische Säuren und die entsprechenden Derivate a1 kommen im allgemeinen solche mit 2 bis 10 Kohlenstoffatomen, vorzugsweise 4 bis 6 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutar säure, 3-Methylglutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl; Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Besonders bevorzugt wird Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt.

Als aromatische Dicarbonsäure a2 sind im allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol% a3.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexaridimethanol, 1,4-Cyclohexandimethanol oder 2,2,4,4-Tetramethyl-1,3-cyclobutandiol. Es können auch Mischungen unterschiedlicher Alkandiole verwendet werden.

Abhängig davon ob ein Überschuß an Säure- oder OH-Endgruppen gewünscht wird, kann entweder die Komponente A oder die Komponente B im Überschuß eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die Polyester, auf denen die erfindungsgemäßen Polyestermischungen basieren, weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der teilaromatischen Polyester verwendet werden.

In einer bevorzugten Ausführungsform setzt man als Hydroxycarbonsäure c2) ein: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA^{®} (Fa. Cargill) erhältlich) sowie eine Mischung aus 3-Polyhydroxybuttersäure und Polyhydroxyvaleriansäure (letzteres ist unter dem Namen Biopol^{®} von Zeneca erhältlich), besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloaikanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Die 2,2'-Bisoxazoline c5 der allgemeinen Formel III sind im allgemeinen erhältlich durch das Verfahren aus Angew. Chem. Int. Edit, Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Zur Herstellung der teilaromatischen Polyester können beispielsweise von 70 bis 98 mol-% B, bis 30 mol-% c3 und 0,5 bis 30 mol-% c4 und 0,5 bis 30 mol% c5, jeweils bezogen auf die Summe der Molmengen der Komponenten B, c3, c4 und c5, verwendet werden. Nach einer anderen bevorzugten Ausführungsform ist es möglich von 0,1 bis 5, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ᵤ-, wobei u 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der teilaromatischen Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:
Weinsäure, Zitronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Die Verbindungen d1 werden in der Regel in Mengen von 0,01 bis 15, bevorzugt 0,05 bis 10, besonders bevorzugt 0,1 bis 4 mol-%, bezogen auf die Komponente A eingesetzt.

Als Komponente d2 werden ein oder eine Mischung unterschiedlicher Isocyanate eingesetzt. Es können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem

Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikemiges Isocyanat d2 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der Isocyanatgruppen, enthalten.

Unter einem aliphatischen Diisocyanat d2 werden im Rahmen der vorliegenden Erfindung vor allem lineare oder verzweigte Alkylendiisocyanate oder Cycloalkylendüsocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d2 sind 1,6-Hexamethylendiisocyanat und Isophorondiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des n-Hexamethylendiisocyanats.

Im allgemeinen wird die Komponente d2 in Mengen von 0,01 bis 5, bevorzugt 0,05 bis 4 mol%, besonders bevorzugt 0,1 bis 4 mol-% bezogen auf die Summe der Molmengen von A und B verwendet.

Als Divinylether d3 kann man im allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter teilaromatischer Polyester basieren auf den folgenden Komponenten
A, B, d1
A, B, d2
A, B, d1, d2
A, B, d3
A, B, c1
A,B,c1,d3
A, B, c3, c4
A, B, c3, c4, c5
A, B, d1, c3, c5
A, B, c3, d3
A, B, c3, d1
A, B, c1, c3, d3
A, B, c2

Darunter sind teilaromatische Polyester, die auf A, B, d1 oder A, B, d2 oder auf A, B, d1, d2 basieren besonders bevorzugt. Nach einer anderen bevorzugten Ausführungsform basieren die teilaromatischen Polyester auf A, B, c3, c4., c5 oder A, B, d1, c3, c5.

Die genannten teilaromatischen Polyester und die erfindungsgemäßen Polyestermischungen sind in der Regel biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch in mindestens einem der drei in DIN V 54900-2 (Vornorm, Stand September 1998) definierten Verfahren einen prozentualen Grad des biologischen Abbaus von mindestens 60% aufweist.

Im Allgemeinen führt die biologische Abbaubarkeit dazu, daß die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit läßt sich beispielsweise dadurch quantifizieren, daß Polyester mit Kompost gemischt und für eine bestimmte Zeit gelagert werden. Beispielsweise wird gemäß DIN V 54900-2, Verfahren 3, CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riß- und Lochbildung.

Andere Methoden zur Bestimmung der Bioabbaubarkeit werden beispielsweise in ASTM D 5338 und ASTM D 6400 beschrieben.

Die Herstellung der teilaromatischen Polyester ist an sich bekannt oder kann nach an sich bekannten Methoden erfolgen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Grundsätzlich sind als Komponenten ii der biologisch abbaubaren Polyestermischungen an sich bekannte nachwachsende Rohstoffe geeignet. Erfindungsgemäß einsetzbare nachwachsende Rohstoffe und deren Herstellverfahren sind dem Fachmann bekannt und beispielsweise beschrieben in WO 93/23456 und EP-A2 897 943, auf die an dieser Stelle ausdrücklich Bezug genommen wird.

Bevorzugte nachwachsende Rohstoffe sind Polysaccharide pflanzlichen Ursprungs. Zu den nachwachsenden Rohstoffen gehören auch die sogenannten Cerealien, das heißt, cellulose-, lignin-, stärke- und/oder holzhaltige Pflanzenbestandteile, beispielsweise auch zerkleinerte oder gemahlene Getreide und Getreidespreubestandteile. Besonders bevorzugte nachwachsende Rohstoffe sind ausgewählt aus der Gruppe Stärke, Cellulose, Lignin und Holz, insbesondere geeignet ist Stärke.

Die nachwachsenden Rohstoffe sind sowohl in ihrer natürlich vorkommenden Form als auch derivatisiert, beispielsweise sogenannte destrukturierte Stärke, einsetzbar. Bevorzugt wird Stärke in ihrer natürlich vorkommenden Form, also nicht-destrukturiert, eingesetzt. Die nachwachsenden Rohstoffe können beispielsweise in Form von Fasern oder Pulvern eingesetzt werden.

Grundsätzlich sind als Komponenten iii der biologisch abbaubaren Polyestermischungen Verbindungen geeignet, die zur Ausbildung kovalenter Bindungen sowohl mit Komponente i als auch mit Komponente ii befähigt sind und zwei oder mehr Epoxidgruppen im Molekül enthalten.

Komponenten iii sind Verbindungen, die zwei oder mehr Epoxidgruppen im Molekül enthalten. Insbesondere geeignet sind oligomere oder polymere epoxidierte Verbindungen, beispielsweise Di- oder Polyglycidester von Di- oder Polycarbonsäuren oder-Di- oder Polyglycidether von Di- oder Polyolen, oder Copolymere aus Styrol und Glycidyl(meth)acrylaten, wie sie beispielsweise von Fa. Johnson Polymer unter der Marke Joncryl^{®} ADR 4368 vertrieben werden. Ebenfalls besonders geeignet sind epoxidierte Soja- oder Leinöle, wie sie beispielsweise von der Fa. Henkel unter der Marke Edenol^{®} vertrieben werden.

Die erfindungsgemäßen biologisch abbaubaren Polyestermischungen enthalten üblicherweise von 5 bis 80 Gew.-%, bevorzugt von 10 bis 70 Gew.-%, besonders bevorzugt von 15 bis 60 Gew.-%, insbesondere von 20 bis 50 Gew.-% Komponente i und von 20 bis 95 Gew.-%, bevorzugt von 30 bis 90 Gew.%, besonders bevorzugt von 40 bis 85 Gew.-%, ganz besonders bevorzugt von 50 bis 80 Gew.-% Komponente ii, wobei sich die Gewichtsprozente jeweils auf das Gesamtgewicht der Komponenten i bis ii beziehen und zusammen 100 Gew.-% ergeben.

Die erfindungsgemäßen biologisch abbaubaren Polyestermischungen enthalten darüberhinaus üblicherweise von 0,1 bis 15 Gew.-%, bevorzugt von 0,5 bis 10 Gew.-%, besonders bevorzugt von 1 bis 10 Gew.-% Komponente iii, wobei die Gewichtsprozente jeweils auf das Gesamtgewicht der Komponenten i bis ii bezogen sind.

Die erfindungsgemäßen biologisch abbaubaren Polyestermischungen können weitere dem Fachmann bekannte, aber nicht erfindungswesentliche Inhaltsstoffe enthalten. Mögliche Inhaltsstoffe dieser Art sind beispielsweise von Komponenten i und ii verschiedene biologisch abbaubare Polymere wie aliphatische Homo- oder Copolyester, beispielsweise Polylactid, Polycaprolacton, Polyhydroxyalkanoate oder Polyester aus aliphatischen Dicarbonsäuren und aliphatischen Diolen, oder in der Kunststofftechnik übliche Zusatzstoffe wie Stabilisatoren, Neutralisationsmittel, Gleit- und Trennmittel, Antiblockmittel, Farbstoffe oder Füllstoffe.

Die Herstellung der erfindungsgemäßen biologisch abbaubaren Polyestermischungen aus den einzelnen Komponenten kann nach bekannten Verfahren erfolgen. Solche Verfahren sind dem Fachmann bekannt und beispielsweise beschrieben in EP-A2 897 943 und US 4,762,890, auf die an dieser Stelle ausdrücklich Bezug genommen wird.

Beispielsweise können alle Komponenten i, ii und iii in einem Verfahrensschritt in dem Fachmann bekannten Mischvorrichtungen, beispielsweise Knetern oder Extrudern bei erhöhten Temperaturen, beispielsweise von 120°C bis 240°C, gemischt und zur Reaktion gebracht werden. Die Reaktion wird bevorzugt in Gegenwart eines Radikalstarters durchgeführt. Als Radikalstarter geeignete Verbindungen, beispielsweise organische Peroxid- oder Azoverbindungen, und Mengen sind dem Fachmann bekannt und beispielsweise in EP-A2 897 943 beschrieben.

Zur Herstellung der erfindungsgemäßen biologisch abbaubaren Polyestermischungen können aber auch in einem ersten Verfahrensschritt Komponente iii mit einer der Komponenten i oder ii, bevorzugt Komponente i, gemischt und, gegebenenfalls in Anwesenheit eines Radikalstarters, zur Reaktion gebracht werden, und in einem zweiten Verfahrensschritt die jeweils noch nicht eingesetzte Komponente ii oder i, bevorzugt Komponente ii, eingemischt und zur Reaktion gebracht werden. Geeignete Stoffe, Vor richtungen und Verfahren sind dem Fachmann bekannt und beispielsweise in EP-A2 897 943 beschrieben.

Die erfindungsgemäßen biologisch abbaubaren Polyestermischungen sind besonders zur Herstellung von Blends, Formteilen, Folien oder Fasern geeignet. Die Herstellung kann nach dem Fachmann bekannten Methoden erfolgen.

Ein besonderes Anwendungsgebiet der biologisch abbaubaren Polyestermischungen mit verbesserten Abbauraten betrifft die Verwendung zur Herstellung von Folien, insbesondere Mulchfolien für die Agrarwirtschaft. Solche Mulchfolien werden zum Schutz meist junger Setzlinge auf landwirtschaftlichen Flächen ausgebracht. Nach der Ernte werden diese Mulchfolien auf der landwirtschaftlichen Fläche belassen oder untergepflügt. Bis zum Beginn der nächstjährigen Aussaat ist der nahezu vollständige biologische Abbau dieser Mulchfolien zwingend notwendig.

Mit Hilfe der erfindungsgemäßen biologisch abbaubaren Polyestermischungen werden biologisch abbaubare Polymermischungen mit hohem Anteil kostengünstiger und ökologisch unbedenklicher, nachwachsender Rohstoffe zur Verfügung gestellt, die neben guten Verarbeitungs- und mechanischen Eigenschaften verbesserte Abbauraten aufweisen.

### Beispiele:

### Anwendungstechnische Messungen:

Das Molekulargewicht Mₙ der teilaromatischen Polyester wurde wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex^{®} HFIP-800P (Durchmesser 8 mm, Länge 5 cm), Shodex^{®} HFIP-803 (Durchmesser 8 mm, Länge 30 cm), Shodex^{®} HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polyrnethylmethacrylat-Standards mit Molekulargewichten von Mₙ = 505 bis Mₙ = 2.740.000. Außerhalb dieses Intervalls liegende Elutionsbereiche wurden durch Extrapolation bestimmt.

Die Schmelztemperaturen der teilaromatischen Polyester wurden durch DSC Messungen mit einem Gerät Exstet DSC 6200R der Fa. Seiko bestimmt
10 bis 15 mg der jeweiligen Proben wurden unter einer Stickstoffatmosphäre mit einer Aufheizrate von 20°C/min von -70°C auf 200°C aufgeheizt. Als Schmelztemperaturen der Proben wurden die Peaktemperaturen des dabei beobachteten Schmelzpeaks angegeben. Als Referenz wurde jeweils ein leerer Probentiegel verwendet.

Die Homogenität der Mischungen der Komponenten i, ii, und iii sowie der zum Vergleich hergestellten Mischungen wurde bestimmt, indem diese Mischungen bei 190°C jeweils zu Folien mit einer Dicke von 30 µm gepreßt wurden. Der Anteil nicht dispergiert vorliegender Komponente ii in diesen Folien wurde durch Augenscheinnahme beurteilt.

Die Abbauraten der biologisch abbaubaren Polyestermischungen und der zum Vergleich hergestellten Mischungen wurden wie folgt bestimmt:
Aus den biologisch abbaubaren Polyestermischungen und den zum Vergleich hergestellten Mischungen wurden durch Pressen bei 190°C jeweils Folien mit einer Dicke von 30 µm hergestellt. Diese Folien wurden jeweils in quadratische Stücke mit einer Kantenlänge von 20 cm geschnitten. Das Gewicht dieser Follenstücke wurde jeweils bestimmt und als "100 Gew.-%" definiert. Über einen Zeitraum von vier Wochen wurden die Folienstücke in einem Klimaschrank auf eine mit Erdboden gefüllte Wanne gelegt, wobei der Erdboden eine einmal täglich kontrollierte Bodenfeuchtigkeit von ca. 40 % bezogen auf die maximale Wasseraufnahmefähigkeit des Erdbodens hatte. Während dieser vier Wochen wurden im Klimaschrank konstante Umgebungsbedingungen eingestellt: eine Temperatur von 30°C, eine relative Luftfeuchtigkeit von ca. 50% und eine durch ein Schnellbelichtungsgerät SUNTEST der Fa. Heraeus erzeugte Bestrahlung der Folien in einem Wellenlängenbereich von 300 bis 800 nm mit einer Bestrahlungsstärke von 765 W/m². Im Wochenabstand wurde jeweils das verbleibende Gewicht der Folienstücke gemessen und auf Gew.-% (bezogen auf das zu Versuchsbeginn ermittelte und als "100 Gew.-%" definierte Gewicht) umgerechnet.

### Einsatzstoffe:

### Komponente i:

- i-1:: Zur Herstellung des Polyesters i-1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1h langsam zudosiert.
Der so erhaltene Polyester i-1 wies eine Schmelztemperatur von 119°C und ein Molekulargewicht (Mₙ) von 23000 g/mol auf.

### Komponente ii:

Als Komponente ii wurde eingesetzt:
- ii-1:: Kartoffelstärke in Pulverform mit einem mittleren Teilchendurchmesser von 30 µm.
- ii-2:: Unter der Marke Abocell^{®} Typ FD600-30 von Fa. J. Rettenmaier & Söhne GmbH & Co. vertriebene Cellulosefasern mit einer durchschnittlichen Faserlänge von 45 µm und einer durchschnittlichen Faserdicke von 25 µm.

### Komponente iii:

Als Komponente iii wurde eingesetzt (nicht erfindungsgemäß):
- iii-1:: Maleinsäureanhydrid

### Weitere Komponenten:

Als Komponente zur Herstellung nicht erfindungsgemäßer Mischungen wurde eingesetzt:
- i-1-V:: Ein aliphatischer Polyester, Polylactid Natureworks^{®} 2000D der Fa. Cargill-Dow.

Herstellung und Prüfung erfindungsgemäßer Polyestermischungen sowie von Mischungen zum Vergleich:
In einem Kneter Rheocord^{®} der Fa. Haake wurden bei einer Drehzahl von 50 U/min und einer Temperatur von 160°C unter Argonatmosphäre jeweils 50 g der Komponente i-1 aufgeschmolzen, Komponente iii-1 wurde zugegeben, und die Mischung 10 min geknetet. Anschließend wurde die Komponenten ii-1 zugegeben und bei 160°C weitere 10 min geknetet. Die jeweiligen Mengen der Komponenten iii-1 und ii-1 wurden dabei so gewählt, daß sich die in Tabelle 1 wiedergegebenen Zusammensetzungen ergeben. Komponente iii-1 wurde dabei in Form einer Lösung zugegeben, die aus 1 Gewichtsteil iii-1, einem Gewichtsteil Methylethylketon und 0,03 Gewichtsteilen Di-t-Butylperoxid bestand.

Die nach der vorab beschriebenen Methode bestimmten Homogenitäten der erhaltenen Mischungen werden ebenfalls in Tabelle 1 wiedergegeben.

**Tabelle 1:**

| | ii-1 20 | ii-1 40 | ii-1 60 | ii-1 70 | ii-1 80 |
|---|---|---|---|---|---|
| | Gew.-%* | Gew.-%* | Gew.-%* | Gew.-%* | Gew.-%* |
| 0 Gew.-%* iii-1 (zum Vergleich) | + | - | - | - | - |
| 1,0 Gew.-%* iii-1 | ++ | ++ | + | - | - |
| 1,5 Gew.-%* iii-1 | ++ | ++ | ++ | + | + |
| 3,0 Gew.-%* iii-1 | ++ | ++ | ++ | ++ | ++ |
| 5,0 Gew.-%* iii-1 | ++ | ++ | ++ | ++ | ++ |

| | | | | | |
|---|---|---|---|---|---|
| *: Die Gew.-% sind bezogen auf das Gesamtgewicht der Komponenten i-1 und ii-1. -: inhomogene Mischung mit großen Anteilen nicht-dispergierter Komponente ii-1 +: weitgehend homogene Mischung mit vereinzelt nicht-dispergierter Komponente ii-1 ++: homogene Mischung mit vollständig dispergierter Komponente ii-1 | | | | | |

In einem Kneter Rheocord^{®} der Fa. Haake wurden bei einer Drehzahl von 60 U/min und einer Temperatur von 160°C unter Argonatmosphäre jeweils 50 g der Komponente i-1 aufgeschmolzen, Komponente iii-1 wurde zugegeben, und die Mischung 10 min geknetet. Anschließend wurde die Komponenten ii-2 zugegeben und bei 160°C weitere 10 min geknetet. Die jeweiligen Mengen der Komponenten iii-1 und ii-2 wurden dabei so gewählt, daß sich die in Tabelle 2 wiedergegebenen Zusammensetzungen ergeben. Komponente iii-1 wurde dabei in Form einer Lösung zugegeben, die aus 1 Gewichtsteil iii-1, einem Gewichtsteil Methylethylketon und 0,03 Gewichtsteilen Di-t-Butylperoxid bestand.

Die nach der vorab beschriebenen Methode bestimmten Homogenitäten der erhaltenen Mischungen, werden ebenfalls in Tabelle, 2 wiedergegeben.

**Tabelle 2:**

| | ii-2 20 Gew.-%* | ii-2 40 Gew.-%* | ii-2 60 Gew.-%* | ii-2 70 Gew.-%* | ii-2 80 Gew.-%* |
|---|---|---|---|---|---|
| 0 Gew.-%* iii-1 (zum Vergleich) | + | - | - | - | - |
| 1,0 Gew.-%* iii-1 | ++ | ++ | + | - | - |
| 1,5 Gew.-%* iii-1 | ++ | ++ | ++ | + | + |
| 3,0 Gew.-%* iii-1 | ++ | ++ | ++ | ++ | ++ |
| 5,0 Gew.-%* iii-1 | ++ | ++ | ++ | ++ | ++ |

| | | | | | |
|---|---|---|---|---|---|
| *: Die Gew.-% sind bezogen auf das Gesamtgewicht der Komponenten i-1 und ii-2. -: inhomogene Mischung mit großen Anteilen nicht-dispergierter Komponente ii-2 +: weitgehend homogene Mischung mit vereinzelt nicht-dispergierter Komponente ii-2 ++: homogene Mischung mit vollständig dispergierter Komponente ii-2 | | | | | |

In einem Kneter Rheocord^{®} der Fa. Haake wurden bei einer Drehzahl von 60 U/min und einer Temperatur von 190°C unter Argonatmosphäre jeweils 50 g der Komponente i-1 oder i-1-V aufgeschmolzen, Komponente iii-1 wurde zugegeben, und die Mischung 10 min geknetet. Anschließend wurde die Komponenten ii-1 zugegeben und bei 190°C weitere 10 min geknetet. Die jeweiligen Mengen der Komponenten iii-1 und ii-1 wurden dabei so gewählt, daß sich die in Tabelle 3 wiedergegebenen Zusammensetzungen ergeben. Komponente iii-1 wurde dabei in Form einer Lösung zugegeben, die aus 1 Gewichtsteil iii-1, einem Gewichtsteil Methylethylketon und 0,03 Gewichtsteilen Di-t-Butylperoxid bestand.

Die nach der vorab beschriebenen Methode bestimmten Abbauraten** der erhaltenen Mischungen werden ebenfalls in Tabelle 3 wiedergegeben.

**Tabelle 3**

| Mischung | | Abbaurate** nach 0 Wochen (Gew.-%) | Abbaurate** nach 1 Woche (Gew.-%) | Abbaurate** nach 2 Wochen (Gew.-%) | Abbaurate** nach 3 Wochen (Gew.-%) | Abbaurate** nach 4 Wochen (Gew.-%) |
|---|---|---|---|---|---|---|
| i-1-V, | 50 Gew.-%* | 100 | 95 | 89 | 82 | 78 |
| ii-1, | 50 Gew.-%* | | | | | |
| iii-1, | 0 Gew.-%* | | | | | |
| (zum Vergleich) | | | | | | |
| i-1-V, | 50 Gew.-%* | 100 | 98 | 94 | 91 | 87 |
| ii-1, | 50 Gew.-%* | | | | | |
| iii-1, | 1,0 Gew.-%* | | | | | |
| (zum Vergleich) | | | | | | |
| i-1, | 50 Gew.-%* | 100 | 95 | 87 | 70 | 52 |
| ii-1, | 50 Gew.-%* | | | | | |
| iii-1, | 0 Gew.-%* | | | | | |
| (zum Vergleich) | | | | | | |
| i-1, | 50 Gew.-%* | 100 | 94 | 72 | 53 | 31 |
| ii-1, | 50 Gew.-%* | | | | | |
| iii-1, | 1,0 Gew.-%* | | | | | |

| | | | | | | |
|---|---|---|---|---|---|---|
| *: Die Gew.-% sind bezogen auf das Gesamtgewicht der Komponenten i-1 (bzw. i-1-V) und ii-1. **: Abbaurate ist definiert wie auf Seite 17, Zeilen 13 bis 15 beschrieben | | | | | | |

Die Versuche belegen, daß die erfindungsgemäßen Polyestermischungen mit hohem Anteil nachwachsender Rohstoffe gute Verarbeitungseigenschaften und verbesserte Abbauraten aufweisen.

## Patentansprüche

1. Biologisch abbaubare Polyestermischung, umfassend
5 bis 80 Gew.-%, bezogen auf das Gesamtgewicht der Komponenten i bis ii, mindestens eines Polyesters auf Basis von aliphatischen und aromatischen Dicarbonsäuren und aliphatischen Dihydroxyverbindung (Komponente i) und
20 bis 95 Gew.-%, bezogen auf das Gesamtgewicht der Komponenten i bis ii, mindestens eines nachwachsenden Rohstoffs (Komponente ii) und
0,1 bis 15 Gew.-%, bezogen auf das Gesamtgewicht der Komponenten i bis ii, einer Verbindung als Komponente iii, die zwei oder mehr Epoxidgruppen im Molekül enthält.

2. Biologisch abbaubare Polyestermischung nach Anspruch 1, wobei Komponente i aufgebaut ist aus:
A) einer Säurekomponente aus
a1) 30 bis 99 mol-% mindestens einer aliphatischen oder mindestens einer cycloaliphatischen Dicarbonsäure oder deren esterbildende Derivate oder Mischungen davon
a2) 1 bis 70 mol% mindestens einer aromatischen Dicarbonsäure oder deren esterbildendern Derivat oder Mischungen davon und
a3) 0 bis 5 mol-% einer sulfonatgruppenhaltigen Verbindung,
wobei die Molprozente der Komponenten a1) bis a3) zusammen 100% ergeben und
B) einer Diolkomponente aus mindestens einem C₂-bis C₁₂-Alkandiol oder einem C₅- bis C₁₀-Cycloalkandiol oder Mischungen davon
und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₘ-O]ₘ-H (I)
in der n für 2, 3 oder 4 und m für eine ganze Zahl von 2 bis 250 stehen,
c2) mindestens einer Hydroxycarbonsäure der Formel IIa oder IIb 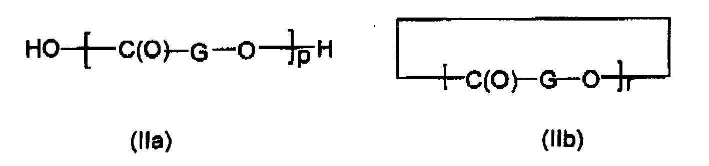 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einem 2,2'-Bisoxazolins der allgemeinen Formel III 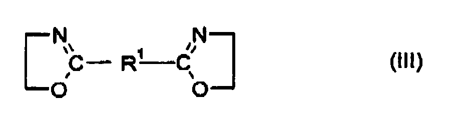 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und IVb 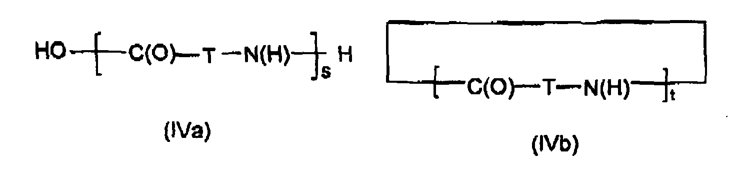 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂. wobei R² für Methyl oder Ethyl steht,
und Polyoxazolinen mit der wiederkehrenden Einheit V 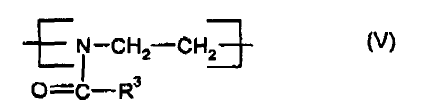 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
oder Mischungen aus c1) bis c6)
und
D) einer Komponente ausgewählt aus
d1) mindestens einer Verbindung mit mindestens drei zur Esterbildung befähigten Gruppen,
d2) mindestens eines Isocyanates
d3) mindestens eines Divinylethers
oder Mischungen aus d1) bis d3).

3. Biologisch abbaubare Polyestermischung nach den Ansprüchen 1 bis 2, wobei Komponente ii mindestens ein Stoff ausgewählt aus der Gruppe Stärke, Cellulose, Lignin, Holz und Cerealien ist.

4. Biologisch abbaubare Polyestermischung nach den Ansprüchen 1 bis 3, wobei Komponente iii eine oligomere oder polymere epoxidierte Verbindung ist.

5. Biologisch abbaubare Polyestermischung nach Anspruch 4, wobei Komponente iii ein Copolymer aus Styrol und Glycidyl(meth)acrylaten ist.

6. Biologisch abbaubare Polyestermischung nach den Ansprüchen 1 bis 5, umfassend
10 bis 70 Gew.-% Komponente i und
30 bis 90 Gew.-% Komponente ii,
jeweils bezogen auf das Gesamtgewicht der Komponenten i bis ii.

7. Biologisch abbaubare Polyestermischung nach den Ansprüchen 1 bis 6, umfassend 0,5 bis 10 Gew.-% Komponente iii, bezogen auf das Gesamtgewicht der Komponente i bis ii.

8. Biologisch abbaubare Polyestermischung nach den Ansprüchen 1 bis 7, enthaltend weiterhin Polylactid. Polycaprolacton, Polyhydroxyalkanoat oder einen Polyester aus aliphatischen Dicarbonsäuren und aliphatischen Diolen.

9. Verfahren zur Herstellung von biologisch abbaubaren Polyestermischungen gemäß den Ansprüchen 1 bis 8, **dadurch gekennzeichnet, dass** die Komponenten i, ii und iii in einem Schritt gemischt und, gegebenenfalls in Anwesenheit eines Radikalstarters, zur Reaktion gebracht werden.

10. Verfahren zur Herstellung von biologisch abbaubaren Polyestermischungen gemäß den Ansprüchen 1 bis 9, **dadurch gekennzeichnet, dass** in einem ersten Schritt Komponente iii mit einer der Komponenten i oder ii gemischt und, gegebenenfalls in Anwesenheit eines Radikalstarters, zur Reaktion gebracht wird, und in einem zweiten Schritt die jeweils noch nicht eingesetzte Komponente ii oder i eingemischt und zur Reaktion gebracht wird.

11. Verwendung der biologisch abbaubaren Polyestermischungen gemäß den Ansprüchen 1 bis 10 zur Herstellung von Blends, Formteilen, Folien oder Fasern.

12. Blends, Formteile, Folien oder Fasern, umfassend biologisch abbaubare Polyestermischungen gemäß den Ansprüchen 1 bis 11.

## Claims

1. A biodegradable polyester mixture comprising
from 5% to 80% by weight, based on the total weight of components i to ii, of at least one polyester based on aliphatic and aromatic dicarboxylic acids and an aliphatic dihydroxy compound (component i) and
from 20% to 95% by weight, based on the total weight of components i to ii, of at least one renewable raw material (component ii) and
from 0.1 % to 15% by weight, based on the total weight of components i to ii, of a compound as component iii which comprises two or more epoxy groups in the molecule.

2. The biodegradable polyester mixture according to claim 1 wherein said component i is polymerized from:
A) an acid component comprising
a1) from 30 to 99 mol% of at least one aliphatic or at least one cycloaliphatic dicarboxylic acid or its ester-forming derivatives or mixtures thereof
a2) from 1 to 70 mol% of at least one aromatic dicarboxylic acid or its ester-forming derivative or mixtures thereof and
a3) from 0 to 5 mol% of a sulfonated compound,
the mole percentages of said components a1) to a3) adding up to 100% and
B) a diol component comprising at least one C₂- to C₁₂-alkanediol or a C₅- to C₁₀-cycloalkanediol or mixtures thereof
and if desired additionally one or more components selected from
C) a component selected from
c1) at least one dihydroxy compound which comprises ether functions and has the formula I
HO-[(CH₂)ₙ-O]ₘ-H (I)
where n is 2, 3 or 4 and m is an integer from 2 to 250,
c2) at least one hydroxy carboxylic acid of the formula IIa or IIb 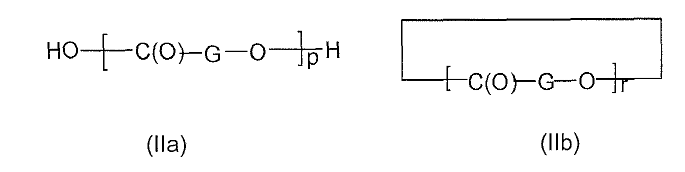 where p is an integer from 1 to 1500, r is an integer from 1 to 4 and G is a radical selected from the group consisting of phenylene, -(CH₂)_{q}-, where q is an integer from 1 to 5, -C(R)H- and -C(R)HCH₂, where R is methyl or ethyl,
c3) at least one amino-C₂- to C₁₂-alkanol or at least one amino-C₅- to C₁₀-cycloalkanol or mixtures thereof
c4) at least one diamino-C₁- to C₈-alkane
c5) at least one 2,2'-bisoxazoline of the general formula III 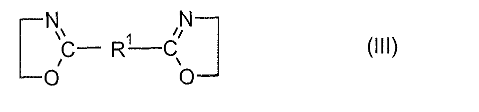 where R¹ is a single bond, a (CH₂)_{z}-alkylene group, where z = 2, 3 or 4, or a phenylene group
c6) at least one amino carboxylic acid selected from the group consisting of the natural amino acids, polyamides obtainable by polycondensation of a dicarboxylic acid having from 4 to 6 carbon atoms and a diamine having from 4 to 10 carbon atoms, compounds of the formulae IV a and IVb 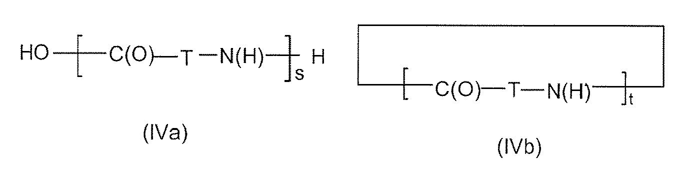 where s is an integer from 1 to 1500, t is an integer from 1 to 4 and T is a radical selected from the group consisting of phenylene, -(CH₂)ᵤ-, where u is an integer from 1 to 12, -C(R²)H- and -C(R²)HCH₂, where R² is methyl or ethyl,
and polyoxazolines containing the repeat unit V 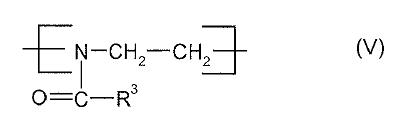 where R³ is hydrogen, C₁-C₆-alkyl, C₅-C₈-cycloalkyl, unsubstituted or C₁-C₄-alkyl-monosubstituted, -disubstituted or -trisubstituted phenyl or is tetrahydrofuryl,
or mixtures of c1) to c6)
and
D) a component selected from
d1) at least one compound having at least three groups capable of ester formation,
d2) at least one isocyanate
d3) at least one divinyl ether
or mixtures of d1) to d3).

3. The biodegradable polyester mixture according to claim 1 or 2 wherein said component ii is one or more selected from the group consisting of starch, cellulose, lignin, wood and cereals.

4. The biodegradable polyester mixture according to any of claims 1 to 3 wherein said component iii is an oligomeric or polymeric epoxidized compound.

5. The biodegradable polyester mixture according to claim 4 wherein said component iii is a copolymer of styrene and glycidyl (meth)acrylates.

6. The biodegradable polyester mixture according of claims 1 to 5 which comprises
from 10% to 70% by weight of said component i and
from 30% to 90% by weight of said component ii,
each percentage being based on the total weight of said components i to ii.

7. The biodegradable polyester mixture according to any of claims 1 to 6 which comprises from 0.5% to 10% by weight of said component iii, based on the total weight of said components i to ii.

8. The biodegradable polyester mixture according to any of claims 1 to 7, further comprising polylactide, polycaprolactone, polyhydroxyalkanoate or a polyester formed from aliphatic dicarboxylic acids and diphatic diols.

9. A process for producing biodegradable polyester mixtures according to claims 1 to 8, which comprises said components i, ii and iii being in one step mixed and, in the presence or absence of a free-radical initiator, reacted.

10. A process for producing biodegradable polyester mixtures according to claims 1 to 9, which comprises a first step of said component iii being mixed with and, in the presence or absence of a free-radical initiator, reacted with one of said components i or ii and a second step of the hitherto unused component ii or i being mixed in and reacted.

11. The use of the biodegradable polyester mixtures according to claims 1 to 10 for producing blends, moldings, films, sheets or fibers.

12. Blends, moldings, films, sheets or fibers comprising biodegradable polyester mixtures according to claims 1 to 11.

## Revendications

1. Mélange de polyester biodégradable, comprenant :
5 à 80 % en poids, sur base du poids total des composants i à ii, d'au moins un polyester à base d'acides dicarboxyliques aliphatiques et aromatiques et d'un composé dihydroxy aliphatique (composant I), et
20 à 95 % en poids, sur base du poids total des composants i à ii, d'au moins une matière première renouvelable (composant ii), et
0,1 à 15 % en poids, sur base du poids total des composants i à ii, d'un composé comme composant iii, qui contient dans la molécule deux groupes époxydiques, ou plus.

2. Mélange de polyester biodégradable selon la revendication 1, le composant i étant constitué de :
A) un composant d'acide de :
a₁) 30 à 99 % en mole d'au moins un acide dicarboxylique aliphatique ou d'au moins un acide dicarboxylique cycloaliphatique ou leurs dérivés formant des esters ou des mélanges de ceux-ci
a₂) 1 à 70 % en mole d'au moins un acide dicarboxylique aromatique ou son dérivé formant des esters ou des mélanges de ceux-ci, et
a₃) 0 à 5 % en mole d'un composé contenant des groupes sulfonate,
les pourcentage en mole des composants a₁) à a₃) totalisant 100 %, et
B) un composant diol composé d'au moins un alcanediol en C₂-C₁₂ ou d'un cycloalcanediol en C₅-C₁₀ ou des mélanges de ceux-ci
et si on le souhaite encore un ou plusieurs composants choisis parmi :
C) un composant sélectionné dans :
c₁) au moins un composé dihydroxy contenant des fonctions éther de formule I
HO-[(CH₂)ₙ-O]ₘ-H (I)
dans laquelle n représente 2, 3 ou 4 et m, un nombre entier de 2 à 250,
c₂) au moins un acide hydroxycarboxylique de formule IIa ou IIb 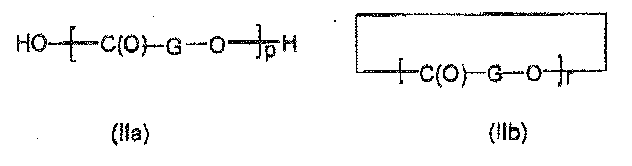 dans laquelle p signifie un nombre entier de 1 à 1500 et r un nombre entier de 1 à 4, et G représente un radical choisi parmi le groupe composé des phénylène, -(CH₂)_{q}-, q signifiant un nombre entier de 1 à 5, -C(R)H- et -C(R)HCH₂, R représentant un méthyle ou un éthyle
c₃) au moins un amino-alcanol en C₂-C₁₂ ou au moins un amino-cycloalcanol en C₅-C₁₀ ou des mélanges de ceux-ci
c₄) au moins un diamino-alcane en C₁-C₈
c₅) au moins un 2,2'-bisoxazoline de formule générale III : 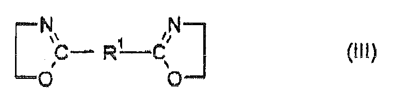 R¹ signifiant une liaison simple, un groupe alkylène (CH₂)_{z}, avec z = 2, 3 ou 4, ou un groupe phénylène
c₆) au moins un acide aminocarboxylique choisi parmi le groupe composé des acides aminés naturels, des polyamides, qu'on obtient par polycondensation d'un acide dicarboxylique avec 4 à 6 atomes de carbone et une diamine avec 4 à 10 atomes de carbone, des composés de formules IVa et IVb 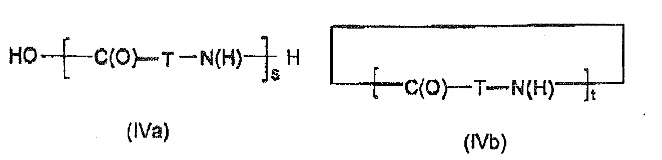
dans lesquelles s signifie un nombre entier de 1 à 1500 et t un nombre entier de 1 à 4, et T représente un radical choisi parmi le groupe composé des phénylène, -(CH₂)ᵤ-, u signifiant un nombre entier de 1 à 12, -C(R²)H- et -C(R²)HCH₂, R² représentant un méthyle ou un éthyle,
et des polyoxazolines avec le motif récurrent V 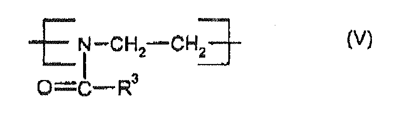 dans lequel R³ représente un hydrogène, un alkyle en C₁-C₆, un cycloalkyle en C₅-C₈, un phényle non substitué ou substitué jusqu'à trois fois par des groupes alkyle en C₁-C₄, ou un tétrahydrofuryle,
ou des mélanges de c₁) à c₆)
et
D) un composant sélectionné dans
d₁) au moins un composé avec au moins trois groupes capables de former des esters,
d₂) au moins un isocyanate
d₃) au moins un divinyléther
ou des mélanges de d₁) à d₃).

3. Mélange de polyester biodégradable selon les revendications 1 à 2, dans lequel le composant ii est au moins une matière choisie parmi le groupe des amidon, cellulose, lignine, bois et céréales.

4. Mélange de polyester biodégradable selon les revendications 1 à 3, dans lequel le composant iii est un composé époxydé oligomère ou polymère.

5. Mélange de polyester biodégradable selon la revendication 4, le composant iii étant un copolymère de styrène et de glycidyl(méth)acrylates.

6. Mélange de polyester biodégradable selon les revendications 1 à 5, comprenant :
10 à 70 % en poids du composant i et
30 à 90 % en poids du composant ii,
chaque fois sur base du poids total des composants i à ii.

7. Mélange de polyester biodégradable selon les revendications 1 à 6, comprenant 0,5 à 10 % en poids du composant iii, sur base du poids total des composants i à ii.

8. Mélange de polyester biodégradable selon les revendications 1 à 7, contenant en outre un polylactide, la polycaprolactone, le polyhydroxyalcanoate ou un polyester d'acides dicarboxyliques aliphatiques et de diols aliphatiques.

9. Procédé de fabrication de mélanges de polyester biodégradables selon les revendications 1 à 8, **caractérisé en ce que** les composants i, ii et iii sont mélangés en une étape et qu'ils sont mis en réaction le cas échéant en présence d'un initiateur de radicaux.

10. Procédé de fabrication de mélanges de polyester biodégradables selon les revendications 1 à 9, **caractérisé en ce que** lors d'une première étape, le composant iii est mélangé avec un des composants i ou ii, et est mis en réaction le cas échéant en présence d'un initiateur de radicaux, et lors d'une deuxième étape, les composants ii ou i non encore utilisés sont incorporés et mis en réaction.

11. Utilisation des mélanges de polyester biodégradables selon les revendications 1 à 10 pour la fabrication de mélanges, de pièces moulées, de feuilles ou de fibres.

12. Mélanges, pièces moulées, feuilles ou fibres comprenant des mélanges de polyester biodégradables selon les revendications 1 à 11.
